# EUROPEAN PATENT APPLICATION

(11) **EP 2 784 117 A1**
(43) Date of publication of application: **01.10.2014**
(21) Application number: 12851299.3
(22) Date of filing: 06.11.2012
(51) Int. Cl.: C08L 23/10, C08K 9/00, C08L 101/00

(54) **RESIN COMPOSITE MATERIAL AND METHOD FOR MANUFACTURING RESIN COMPOSITE MATERIAL**

(30) Priority: 24.11.2011 JP 2011256038
(71) Applicant: Sekisui Chemical Co., Ltd., Osaka 530-8565 (JP)
(72) Inventor: TAKAHASHI, Katsunori, Mishima-gun Osaka 618-0021 (JP); INUI, Nobuhiko, Mishima-gun Osaka 618-0021 (JP); WADA, Takuya, Mishima-gun Osaka 618-0021 (JP); TABATA, Hironori, Hirakata-shi Osaka 573-0144 (JP); OSANO, Keiichi, Mishima-gun Osaka 618-0021 (JP)
(74) Representative: Ter Meer Steinmeister & Partner
(86) International application number: PCT/JP2012/078670
(87) International publication number: WO 2013/077178

(57) **Abstract**

Provided are a resin composite material containing plate-shaped exfoliated graphite or exfoliated graphite oxide with few folds and wrinkles and having effectively-enhanced mechanical strength such as tensile elastic modulus and a method for manufacturing the resin composite material. The resin composite material is a resin composite material including a synthetic resin and exfoliated graphite or exfoliated graphite oxide, wherein an average value of an average degree of flexion of the exfoliated graphite or of the exfoliated graphite oxide in one of two orthogonal cutting planes along which the resin composite material is cut and an average degree of flexion of the exfoliated graphite or of the exfoliated graphite oxide in the other cutting plane is less than 0.3. The method for manufacturing the resin composite material includes the steps of: preparing two or more resin compositions having the'synthetic resin and the exfoliated graphite or the exfoliated graphite oxide; and stacking and pressing the resin compositions together after the preparation step.

## Description

### TECHNICAL FIELD

The present invention relates to a resin composite material in which a carbon material is dispersed in a synthetic resin and a method for manufacturing the resin composite material, and more particularly relates to a resin composite material in which a carbon material is exfoliated graphite and a method for manufacturing the resin composite material.

### BACKGROUND ART

In recent years, carbon materials having a graphene sheet structure have received attention due to their high elastic modulus and high electrical conductivity. Compounding such a carbon material having a graphene structure with a synthetic resin makes it possible to reinforce a product made of the synthetic resin and impart electrical conductivity to the product. Particularly, graphene sheets, carbon nanotubes, exfoliated graphite, or the like have a nano-scale size and a large specific surface area. Therefore, it is considered that such a carbon material can more effectively exhibit the effects described above when compounded with a resin.

Non-Patent Document 1 listed below discloses a resin composite material compounded with exfoliated graphite as a filler made of a carbon material. Non-Patent Document 1 describes that a resin composite material having high mechanical strength can be obtained by imparting the rigidity of the exfoliated graphiteto a resin composite material.

### PRIOR ART DOCUMENT

### NON-PATENT DOCUMENT

Non-Patent Document 1: Macromolecular Rapid Communication 2009, 30, 316-327

### SUMMARY OF THE INVENTION

### PROBLEMS TO BE SOLVED BY THE INVENTION

However, there is a case where the exfoliated graphite in the resin composite material described in Non-Patent Document 1 do not have a plate shape because, for example, they are folded in the matrix resin or have many wrinkles. This makes it difficult to effectively impart the rigidity of the exfoliated graphite to the resin composite material. Therefore, there is a case where the mechanical strength of the resin composite material cannot be sufficiently enhanced.

It is an object of the present invention to provide a resin composite material containing plate-shaped exfoliated graphite or exfoliated graphite oxide with few folds and wrinkles and having effectively-enhanced mechanical strength such as tensile elastic modulus and a method for manufacturing the resin composite material.

### SOLUTIONS TO THE PROBLEMS

A resin composite material according to the present invention is a resin composite material comprising a synthetic resin and exfoliated graphite or exfoliated graphite oxide, wherein when a value represented by (1-A/B), where A is a shortest distance between both ends of a cross-section of one of the exfoliated graphite or of the exfoliated graphite oxide exposed in one cutting plane along which the resin composite material is cut and B is a length of a path between the both ends, is defined as a degree of flexion of the one of the exfoliated graphite or of the exfoliated graphite oxide in the cutting plane and an average value of degrees of flexion of the exfoliated graphite or of the exfoliated graphite oxide exposed in the cutting plane is defined as an average degree of flexion in the cutting plane, an average value of an average degree of flexion of the exfoliated graphite or of the exfoliated graphite oxide in one of two orthogonal cutting planes along which the resin composite material is cut and an average degree of flexion of the exfoliated graphite or of the exfoliated graphite oxide in the other cutting plane is less than 0.3.

In one specific aspect of the resin composite material according to the present invention, the synthetic resin is polypropylene. In this case, it is possible to reduce the cost of a composite resin molded product and easily mold the composite resin molded product.

A method for manufacturing the resin composite material according to the present invention includes the steps of: preparing two or more resin compositions having the synthetic resin and the exfoliated graphite or the exfoliated graphite oxide; and stacking and pressing the two or more resin compositions together after the preparation step.

In one specific aspect of the method for manufacturing the resin composite material according to the present invention, the preparation step includes the step of melt-kneading the synthetic resin and the exfoliated graphite or the exfoliated graphite oxide to prepare the resin composition. Such a step makes it possible to prepare a resin composition containing the synthetic resin as a matrix resin and the exfoliated graphite or the exfoliated graphite oxide.

In another specific aspect of the method for manufacturing the resin composite material according to the present invention, the preparation step includes the steps of: dispersing the exfoliated graphite or the exfoliated graphite oxide in a dispersion medium to obtain a dispersion liquid in which the exfoliated graphite or the exfoliated graphite oxide are dispersed; applying the dispersion liquid onto a surface of the synthetic resin after the dispersion step; and volatilizing the dispersion liquid contained in the dispersion liquid applied onto the synthetic resin after the application step to prepare the resin composition in which the exfoliated graphite or the exfoliated graphite oxide are attached to the surface of the synthetic resin. Such steps make it possible to prepare a resin composition in which the exfoliated graphite or the exfoliated graphite oxide are attached to the surface of the synthetic resin.

In another specific aspect of the method for manufacturing the resin composite material according to the present invention, after the pressing step, the additional pressing step of further preparing the obtained two or more resin composite materials and stacking and pressing them together is further provided and performed once or more. In this case, the mechanical strength of the resin composite material can be further enhanced.

### ADVANTAGES OF THE INVENTION

When the resin composite material according to the present invention is cut along two orthogonal cutting planes, the average value of the average degree of flexion of the exfoliated graphite or of the exfoliated graphite oxide in one of the cutting planes and the average degree of flexion of the exfoliated graphite or of the exfoliated graphite oxide in the other cutting plane is less than 0.3. Therefore, the exfoliated graphite or the exfoliated graphite oxide have few folds and wrinkles and therefore their shape is close to a plate shape. Accordingly, this makes it possible to provide a resin composite material having effectively-enhanced mechanical strength such as tensile elastic modulus.

Further, the method for manufacturing the resin composite material according to the present invention includes stacking and pressing together resin compositions having the synthetic resin and the exfoliated graphite or the exfoliated graphite oxide, which makes it possible to remove folds and wrinkles from the exfoliated graphite or the exfoliated graphite oxide so that their shape is close to a plate shape. Therefore, the manufacture method according to the present invention makes it possible to effectively enhance the mechanical strength, such as tensile elastic modulus, of the resin composite material.

### MODE FOR CARRYING OUT THE INVENTION

Hereinbelow, the present invention will become apparent from the description of specific embodiments of the present invention.

### (Resin composite material)

A resin composite material according to the present invention includes a synthetic resin and exfoliated graphite or exfoliated graphite oxide. In the present invention, the exfoliated graphite are those obtained by exfoliating original graphite and refer to graphene sheet stacks thinner than the original graphite. The exfoliated graphite oxide are those obtained by oxidizing the exfoliated graphite or those obtained by exfoliating graphite oxide, and refer to graphene oxide sheet stacks thinner than the original graphite or the graphite oxide. The number of graphene sheet layers stacked in the exfoliated graphite or the number of graphene oxide sheet layers stacked in the exfoliated graphite oxide shall be smaller than that in the original graphite or the graphite oxide, but is usually about several layers to 200 layers.

The exfoliated graphite or the exfoliated graphite oxide have a shape whose aspect ratio is relatively large because thin graphene sheets or thin graphene oxide sheets are stacked. Therefore, when the exfoliated graphite or the exfoliated graphite oxide are uniformly dispersed in the resin composite material according to the present invention, it is possible to effectively enhance the effect of reinforcing the resin composite material against an external force applied in a direction intersecting with the stacking plane of the exfoliated graphite or of the exfoliated graphite oxide. It is to be noted that in the present invention, the aspect ratio refers to the ratio of the maximum size of the exfoliated graphite or of the exfoliated graphite oxide in a direction parallel to the stacking plane to the thickness of the exfoliated graphite or of the exfoliated graphite oxide.

If the aspect ratio of the exfoliated graphite or of the exfoliated graphite oxide is too low, there may be a case where the effect of reinforcing the resin composite material against an external force applied in a direction intersecting with the stacking plane is not sufficient. If the aspect ratio of the exfoliated graphite or of the exfoliated graphite oxide is too high, there may be a case where the reinforcing effect is saturated and cannot be expected to be further enhanced. Therefore, the lower limit and upper limit of the aspect ratio of the exfoliated graphite or of the oxidized exfoliated graphite are preferably 50 and 5000, respectively.

It is to be noted that the ratio of oxygen atoms contained in the exfoliated graphite oxide is not particularly limited, but the C/O ratio of the exfoliated graphite oxide determined by elemental analysis is preferably 2 or more. If the C/O ratio is less than 2, graphene oxide sheets constituting the exfoliated graphite oxide are likely to have a defect structure. This makes it difficult to reduce the degrees of flexion of the oxidized exfoliated graphite. Therefore, there may be a case where the mechanical strength of the resin composite material cannot be sufficiently enhanced.

A method for obtaining the exfoliated graphite or the exfoliated graphite oxide is not particularly limited, and the exfoliated graphite or the exfoliated graphite oxide can be obtained by a conventionally-known method. The exfoliated graphite can be obtained by, for example, a chemical treatment method in which ions such as nitrate ions are inserted between the layers of graphite and then the graphite is heated; a physical treatment method such as application of ultrasonic waves; or an electrochemical method in which electrolysis is performed using graphite as a working electrode. The exfoliated graphite oxide can be obtained by, for example, the Hummers method (W. S. Hummers et. al., J. Chem. Soc., 80, 1339, 1958) in accordance with JP-A-2002-053313.

Further, the exfoliated graphite or the exfoliated graphite oxide may be subjected to surface modification, if necessary. Examples of the surface modification include grafting of a resin and introduction of a hydrophilic functional group or a hydrophobic functional group. The affinity of the exfoliated graphite or of the exfoliated graphite oxide for the synthetic resin can be increased by subjecting the exfoliated graphite or the exfoliated graphite oxide to the surface modification.

The synthetic resin contained in the resin composite material according to the present invention is not particularly limited, and various well-known synthetic resins can be used. Preferably, a thermoplastic resin is used as the synthetic resin. The resin composite material using a thermoplastic resin can be easily molded with heat by various molding methods to obtain various molded articles. Examples of the thermoplastic resin include, but are not limited to, polyethylene, polypropylene, polystyrene, polyacrylate, polyacrylonitrile, polycarbonate, polyester, polyamide, polyurethane, polyethersulfone, polyetherketone, polyimide, polydimethylsiloxane, (meth)acrylic resin, and copolymers containing monomers constituting these polymers. These synthetic resins may be used singly or in combination of two or more of them.

Particularly, polyolefin can be preferably used as the synthetic resin. Polyolefin is inexpensive and is easily molded with heat. Therefore, the use of polyolefin as the thermoplastic resin makes it possible to reduce the cost of the resin composite material and easily mold the resin composite material. Examples of the polyolefin include, but are not limited to, 1) polyethylene-based resins such as polyethylene, polypropylene, ethylene homopolymers, ethylene-α-olefin copolymers, ethylene-(meth)acrylic acid copolymers, ethylene-(meth)acrylic acid ester copolymers, and ethylene-vinyl acetate copolymers; 2) polypropylene-based resins such as propylene homopolymers, propylene-α-olefin copolymers, propylene-ethylene random copolymers, and propylene-ethylene block copolymers; 3) butene homopolymers; and 4) homopolymers or copolymers of conjugated dienes such as butadiene and isoprene. More preferably, polypropylene, which is more inexpensive, is used as the thermoplastic resin.

The mixing ratio of the exfoliated graphite or of the exfoliated graphite oxide to the synthetic resin is not particularly limited, but the mixing ratio of the exfoliated graphite or of the exfoliated graphite oxide is preferably in the range of 0.1 to 50 parts by weight with respect to 100 parts by weight of the synthetic resin. By setting the mixing ratio to the above range, it is possible to effectively enhance the mechanical strength, such as tensile elastic modulus, of the resin composite material according to the present invention. If the mixing ratio of the exfoliated graphite or of the exfoliated graphite oxide is less than 0.1 parts by weight, there may be a case where the mechanical strength of the resin composite material cannot be sufficiently enhanced. If the mixing ratio of the exfoliated graphite or of the exfoliated graphite oxide exceeds 50 parts by weight, there may be a case where the resin composite material is brittle and is likely to be broken.

The resin composite material according to the present invention may contain various additives without impairing the object of the present invention. Examples of such additives include: phenol-, phosphorus-, amine-, and sulfur-based antioxidants; benzotriazole- and hydroxyphenyl triazine-based UV absorbers; metal harm inhibitors; halogenated flame retardants such as hexabromobiphenyl ether and decabromodiphenyl ether; flame retardants such as ammonium polyphosphate and trimethyl phosphate; various fillers; antistatic agents; stabilizers; and pigments.

When the resin composite material according to the present invention is cut along two orthogonal cutting planes, the average value of the average degree of flexion of the exfoliated graphite or of the exfoliated graphite oxide in one of the cutting planes and the average degree of flexion of the exfoliated graphite or of the exfoliated graphite oxide in the other cutting plane is less than 0.3. In the present invention, the degree of flexion of one of the exfoliated graphite or of the exfoliated graphite oxide in a certain cutting plane along which the resin composite material is cut refers to a value represented by (1-A/B) where A is the shortest distance between both ends of the cross-section of the one of the exfoliated graphite or of the exfoliated graphite oxide exposed in the cutting plane and B is the length of a path between the both ends. In the present invention, the average degree of flexion of the exfoliated graphite or of the exfoliated graphite oxide in a certain cutting plane refers to the average value of the degrees of flexion of the exfoliated graphite or of the exfoliated graphite oxide exposed in the cutting plane.

In the present invention, the exfoliated graphite or the exfoliated graphite oxide contained in the resin composite material have a small degree of flexion. Therefore, the exfoliated graphite or the exfoliated graphite oxide have few folds and wrinkles and therefore their shape is close to a plate shape. Accordingly, the exfoliated graphite or the exfoliated graphite oxide having a small degree of flexion make it possible to effectively enhance the mechanical strength, such as tensile elastic modulus, of the resin composite material.

The average value of the average degrees of flexion can be calculated in the following manner. First, 30 or more of the exfoliated graphite or of the exfoliated graphite oxide exposed in one of the cutting planes are randomly selected. Then, the degrees of flexion of the selected exfoliated graphite or exfoliated graphite oxide are measured. At this time, when the standard deviation of the degrees of flexion of the selected exfoliated graphite or exfoliated graphite oxide is 0.3 or more, one or more of the exfoliated graphite or of the exfoliated graphite oxide is/are excluded from observation objects in descending order of degree of flexion so that the standard deviation becomes less than 0.3. The average value of the thus measured degrees of flexion is calculated and regarded as the average degree of flexion of the exfoliated graphite or of the exfoliated graphite oxide exposed in one of the cutting planes.

Then, the average degree of flexion of the exfoliated graphite or of the exfoliated graphite oxide exposed in the other cutting plane is calculated in the same manner as described above. The average value of these two average degrees of flexion is calculated and regarded as the average value of the average degrees of flexion.

When the average degree of flexion of the exfoliated graphite exposed in only one cutting plane of the resin composite material is measured, there may be a case where the amount of folds and wrinkles of the exfoliated graphite or of the exfoliated graphite oxide cannot be properly expressed by the degree of flexion when, for example, the exfoliated graphite or the exfoliated graphite oxide are oriented in one direction. Therefore, in the present invention, the average degree of flexion needs to be measured in each of the two orthogonal cutting planes to calculate the average value of the two average degrees of flexion so that the amount of folds and wrinkles of the exfoliated graphite or of the exfoliated graphite oxide in the present invention can be properly expressed by the degree of flexion.

### (Method for manufacturing resin composite material)

In a method for manufacturing the resin composite material according to the present invention, a preparation step is first performed in which two or more resin compositions having the synthetic resin and the exfoliated graphite or the exfoliated graphite oxide are prepared. A method for preparing the two or more resin compositions is not particularly limited, and they can be prepared by any appropriate method.

An example of the method for preparing the resin composition includes a method in which the synthetic resin and the exfoliated graphite or the exfoliated graphite oxide are melt-kneaded. Examples of such a melt-kneading method include a method in which the synthetic resin and the exfoliated graphite or the exfoliated graphite oxide are kneaded with heat using a kneading device such as a biaxial screw kneader (e.g., Plastomill), a uniaxial extruder, a biaxial extruder, a Banbury mixer, or a roll; and the like. Preferably, a melt-kneading method using a Plastomill equipped with kneading discs can be employed. In this case, the synthetic resin and the exfoliated graphite or the exfoliated graphite oxide can be sufficiently kneaded, and therefore the exfoliated graphite having a graphene structure can be easily uniformly dispersed.

Another example of the method for preparing the resin composition includes a method in which a dispersion liquid in which the exfoliated graphite or the exfoliated graphite oxide are dispersed is applied onto the synthetic resin and then dried to prepare the resin composition in which the exfoliated graphite or the exfoliated graphite oxide are attached to the surface of the synthetic resin. As described above, the resin composition may be one in which the exfoliated graphite or the exfoliated graphite oxide are contained within the synthetic resin or one in which the exfoliated graphite or the exfoliated graphite oxide are attached to the surface of the synthetic resin.

More specifically, the resin composition in which the exfoliated graphite or the exfoliated graphite oxide are attached to the surface of the synthetic resin is prepared through the following steps. First, a dispersion step is performed in which the exfoliated graphite or the exfoliated graphite oxide are dispersed in a dispersion medium to obtain a dispersion liquid in which the exfoliated graphite or the exfoliated graphite oxide are dispersed. The dispersion medium is not particularly limited, but for example, DMF, DMAc, DMSO, dichlorobenzene, toluene, xylene, methoxybenzene, ethanol, propanol, or pyridine can be used.

Examples of a method for dispersing the exfoliated graphite or the exfoliated graphite oxide in the dispersion medium include a method using ultrasonic waves, methods for stirring and heating; and the like.

Then, an application step is performed in which the dispersion liquid is applied onto the surface of the synthetic resin. A method for application is not particularly limited, but is preferably a method capable of uniformly applying the dispersion liquid onto the surface of the synthetic resin. Examples of such an application method include an application method using spin coating; an application method using bar coating; and the like.

It is to be noted that the shape of the synthetic resin is not particularly limited, but is preferably a sheet shape in order to easily perform pressing that will be described later. An example of a method for obtaining the synthetic resin having a sheet shape includes a method in which the synthetic resin is pressed.

Then, the dispersion liquid contained in the dispersion liquid applied onto the synthetic resin is volatilized to prepare the resin composition in which the exfoliated graphite or the exfoliated graphite oxide are attached to the surface of the synthetic resin. An example of a method for volatilizing the dispersion liquid includes, but is not limited to, a method in which the synthetic resin is dried in a vacuum oven.

The shape of the resin composition is not particularly limited, but is preferably a sheet shape in order to easily perform pressing that will be described later. An example of a method for obtaining the resin composition having a sheet shape includes a method in which the resin composition is pressed.

The ratio of the exfoliated graphite or of the exfoliated graphite oxide to the synthetic resin used in the preparation step is not particularly limited, but the amount of the exfoliated graphite or of the exfoliated graphite oxide is preferably in the range of 0.1 to 50 parts by weight with respect to 100 parts by weight of the synthetic resin. By setting the ratio to the above range, it is possible to effectively enhance the mechanical strength of a resulting resin composite material. If the mixing ratio of the exfoliated graphite or of the exfoliated graphite oxide is less than 0.1 parts by weight, there may be a case where the mechanical strength of a resulting resin composite material cannot be sufficiently enhanced. If the mixing ratio of the exfoliated graphite or of the exfoliated graphite oxide exceeds 50 parts by weight, there may be a case where a resulting resin composite material is brittle and is therefore likely to be broken.

A method for preparing the two or more resin compositions is not particularly limited. For example, the two or more resin compositions may be prepared simply by manufacturing the two or more resin compositions. The two or more resin compositions may be prepared by the same method or different methods. Alternatively, the two or more resin compositions may be prepared by cutting one resin composition into two or more parts.

Then, a step is performed in which the two or more resin compositions are stacked and pressed together to obtain a resin composite material according to the present invention. The pressing makes it possible to remove folds and wrinkles from the exfoliated graphite or the exfoliated graphite oxide contained in the resin composition. Therefore, the exfoliated graphite or the exfoliated graphite oxide can have a shape close to a plate shape. Accordingly, the exfoliated graphite or the exfoliated graphite oxide with few folds and wrinkles make it possible to effectively enhance the mechanical strength, such as tensile elastic modulus, of the resin composite material.

The pressing method is not particularly limited, and the pressing can be performed by an appropriate conventionally-known method. The temperature during the pressing is not particularly limited, but is preferably in the range of 150 to 200°C. By pressing the two or more resin compositions at a temperature within the above range, it is possible to mold the two or more resin compositions into one sheet.

In the present invention, after the pressing step, an additional pressing step may be performed in which the obtained two or more resin composite materials are further prepared and stacked and pressed together. This makes it possible to further remove folds and wrinkles from the exfoliated graphite or the exfoliated graphite oxide contained in the resin composite material. Therefore, the mechanical strength of the resin composite material can be further enhanced. Further, the additional pressing step may be repeated more than once. In this case, the mechanical strength of the resin composite material can be even further enhanced.

An example of a method for preparing the two or more resin composite materials includes a method in which the resin composite material is cut into two or more parts. However, the method is not particularly limited, and the two or more resin composite materials may be prepared simply by manufacturing the resin composite materials in plural form.

Further, after the pressing step, the step of firmly hardening the obtained resin composite material by, for example, irradiating the resin composite material with electron beams may be performed. This makes it difficult for the exfoliated graphite or the exfoliated graphite oxide contained in the resin composite material to loose their shape. Examples of the method for firmly hardening the resin composite material include ultraviolet irradiation and the like other than electron beam irradiation.

Hereinbelow, the present invention will become apparent by way of specific examples and comparative examples. It is to be noted that the present invention is not limited to the following examples.

### (Exfoliated graphite oxide)

Exfoliated graphite oxide whose C/O ratio determined by elemental analysis was 3:1 were manufactured by the same manufacture method and equipment as those used in the Hummers method reported in W. S. Hummers et. al., J. Chem. Soc., 80, 1339, 1958, and were used in examples and comparative examples according to the present invention. In the above manufacture method, graphite available from SEC CARBON, LIMITED, trade name "SNO-5" (average particle size: 5 µm, specific surface area: 15 m²/g) was used as a raw material.

### (Example 1)

In a Labo Plastomill (manufactured by Toyo Seiki Seisaku-sho, Ltd., trade name "R-100") were melt-kneaded 100 parts by weight of polypropylene (available from Prime Polymer Co., Ltd., trade name "J-721GR", tensile elastic modulus: 1.2 GPa) and 3 parts by weight of the exfoliated graphite oxide at 180°C to obtain a resin composition. Then, the resin composition was thermally compressed into a sheet at 190°C by hydraulic pressing.

Then, the obtained resin composition sheet was divided into quarters, stacked, and thermally compressed at 190°C by hydraulic pressing to obtain one resin composite material sheet.

Then, a series of steps of division of the resin composite material sheet into quarters, stacking, and hydraulic pressing was further repeated 9 times to obtain a resin composite material sheet having a thickness of 0.5 mm.

### (Example 2)

The exfoliated graphite oxide were mixed with DMF at a concentration of 30 g/L and dispersed with ultrasonic waves to obtain a dispersion liquid. Separately, polypropylene (available from Prime Polymer Co., Ltd., trade name "J-721GR", tensile elastic modulus: 1.2 GPa) was thermally compressed at 190°C by hydraulic pressing to obtain a polypropylene sheet having a thickness of 50 µm.

Then, the dispersion liquid was applied onto the polypropylene sheet by spin coating and then dried in a vacuum oven at 80°C for 12 hours to obtain a resin composition sheet. In this case, it was found that 3 parts by weight of the exfoliated graphite oxide were attached onto the resin composition sheet from the difference in mass between the polypropylene sheet before application of the dispersion liquid and the resin composition sheet. Thereafter, the 10 resin composition sheets were prepared in total in the same manner as described above.

The 10 resin composition sheets were stacked and thermally compressed at 190°C by hydraulic pressing to obtain a resin composite material sheet having a thickness of 0.5 mm.

### (Example 3)

A resin composite material sheet having a thickness of 0.5 mm was obtained in the same manner as in Example 1 except that 1 part by weight of the exfoliated graphite oxide was used.

### (Example 4)

A resin composite material sheet having a thickness of 0.5 mm was obtained in the same manner as in Example 2 except that the concentration of the dispersion liquid was changed to 10 g/L. In this case, 1 part by weight of the exfoliated graphite oxide was attached onto the resin composition sheet.

### (Example 5)

In a Labo Plastomill (manufactured by Toyo Seiki Seisaku-sho, Ltd., trade name "R-100") were melt-kneaded 100 parts by weight of polyethylene (available from Prime Polymer Co., Ltd., trade name "1300J", tensile elastic modulus: 1.3 GPa) and 3 parts by weight of the exfoliated graphite oxide at 150°C to obtain a resin composition.

Then, the resin composition was thermally compressed into a sheet at 160°C by hydraulic pressing. Then, the obtained resin composition sheet was divided into quarters, stacked, and thermally compressed at 160°C by hydraulic pressing to obtain one resin composite material sheet. Then, a series of steps of division of the resin composite material sheet into quarters, stacking, and hydraulic pressing was further repeated 9 times to obtain a resin composite material sheet having a thickness of 0.5 mm.

### (Example 6)

In a Labo Plastomill (manufactured by Toyo Seiki Seisaku-sho, Ltd., trade name "R-100") were melt-kneaded 100 parts by weight of polyamide (available from Asahi Kasei Corporation, trade name "1300S", bending elastic modulus: 2.7 GPa) and 3 parts by weight of the exfoliated graphite oxide at 270°C to obtain a resin composition.

Then, the resin composition was thermally compressed into a sheet at 290°C by hydraulic pressing. Then, the obtained resin composition sheet was divided into quarters, stacked, and thermally compressed at 290°C by hydraulic pressing to obtain one resin composite material sheet. Then, a series of steps of division of the resin composite material sheet into quarters, stacking, and hydraulic pressing was further repeated 9 times to obtain a resin composite material sheet having a thickness of 0.5 mm.

### (Example 7)

In a Labo Plastomill (manufactured by Toyo Seiki Seisaku-sho, Ltd., trade name "R-100") were melt-kneaded 100 parts by weight of polyester (available from Mitsubishi-Engineering Plastics Corporation, trade name "5010R3-2", tensile elastic modulus: 2.4 GPa) and 3 parts by weight of the exfoliated graphite oxide at 240°C to obtain a resin composition.

Then, the resin composition was thermally compressed into a sheet at 250°C by hydraulic pressing. Then, the obtained resin composition sheet was divided into quarters, stacked, and thermally compressed at 250°C by hydraulic pressing to obtain one resin composite material sheet. Then, a series of steps of division of the resin composite material sheet into quarters, stacking, and hydraulic pressing was further repeated 9 times to obtain a resin composite material sheet having a thickness of 0.5 mm.

### (Example 8)

In a Labo Plastomill (manufactured by Toyo Seiki Seisaku-sho, Ltd., trade name "R-100") were melt-kneaded 100 parts by weight of polymethylmethacrylate (available from MITSUBISHI RAYON CO., LTD., trade name "VH000", tensile elastic modulus: 3.3 GPa) and 3 parts by weight of the exfoliated graphite oxide at 240°C to obtain a resin composition.

Then, the resin composition was thermally compressed into a sheet at 250°C by hydraulic pressing. Then, the obtained resin composition sheet was divided into quarters, stacked, and thermally compressed at 250°C by hydraulic pressing to obtain one resin composite material sheet. Then, a series of steps of division of the resin composite material sheet into quarters, stacking, and hydraulic pressing was further repeated 9 times to obtain a resin composite material sheet having a thickness of 0.5 mm.

### (Example 9)

In a Labo Plastomill (manufactured by Toyo Seiki Seisaku-sho, Ltd., trade name "R-100") were melt-kneaded 100 parts by weight of polycarbonate (available from Mitsubishi-Engineering Plastics Corporation, trade name "H-4000", tensile elastic modulus: 2.4 GPa) and 3 parts by weight of the exfoliated graphite oxide at 270°C to obtain a resin composition.

Then, the resin composition was thermally compressed into a sheet at 280°C by hydraulic pressing. Then, the obtained resin composition sheet was divided into quarters, stacked, and thermally compressed at 280°C by hydraulic pressing to obtain one resin composite material sheet. Then, a series of steps of division of the resin composite material sheet into quarters, stacking, and hydraulic pressing was further repeated 9 times to obtain a resin composite material sheet having a thickness of 0.5 mm.

### (Example 10)

In a Labo Plastomill (manufactured by Toyo Seiki Seisaku-sho, Ltd., trade name "R-100") were melt-kneaded 100 parts by weight of polystyrene (available from DIC Corporation, trade name "CR-3500", bending elastic modulus: 3.3 GPa) and 3 parts by weight of the exfoliated graphite oxide at 220°C to obtain a resin composition.

Then, the resin composition was thermally compressed into a sheet at 220°C by hydraulic pressing. Then, the obtained resin composition sheet was divided into quarters, stacked, and thermally compressed at 220°C by hydraulic pressing to obtain one resin composite material sheet. Then, a series of steps of division of the resin composite material sheet into quarters, stacking, and hydraulic pressing was further repeated 9 times to obtain a resin composite material sheet having a thickness of 0.5 mm.

### (Comparative Example 1)

A resin composite material sheet having a thickness of 0.5 mm was obtained in the same manner as in Example 1 except that the exfoliated graphite oxide were not used.

### (Comparative Example 2)

A resin composite material sheet having a thickness of 0.5 mm was obtained in the same manner as in Example 2 except that the dispersion liquid containing the exfoliated graphite oxide was not applied.

### (Comparative Example 3)

In a Labo Plastomill (manufactured by Toyo Seiki Seisaku-sho, Ltd., trade name "R-100") were melt-kneaded 100 parts by weight of polypropylene (available from Prime Polymer Co., Ltd., trade name "J-721GR", tensile elastic modulus: 1.2 GPa) and 3 parts by weight of the exfoliated graphite oxide at 180°C to obtain a resin composition. Then, the resin composition was thermally compressed into a sheet having a thickness of 0.5 mm at 190°C by hydraulic pressing.

The thus obtained resin composition sheet was regarded as a resin composite material sheet having a thickness of 0.5 mm.

### (Comparative Example 4)

A resin composite material sheet having a thickness of 0.5 mm was obtained in the same manner as in Comparative Example 3 except that 1 part by weight of the exfoliated graphite oxide was used.

### (Comparative Example 5)

A resin composite material sheet having a thickness of 0.5 mm was obtained by thermally compressing the resin composition, obtained by melt-kneading in Example 5, once at 160°C by hydraulic pressing.

### (Comparative Example 6)

A resin composite material sheet having a thickness of 0.5 mm was obtained by thermally compressing the resin composition, obtained by melt-kneading in Example 6, once at 290°C by hydraulic pressing.

### (Comparative Example 7)

A resin composite material sheet having a thickness of 0.5 mm was obtained by thermally compressing the resin composition, obtained by melt-kneading in Example 7, once at 250°C by hydraulic pressing.

### (Comparative Example 8)

A resin composite material sheet having a thickness of 0.5 mm was obtained by thermally compressing the resin composition, obtained by melt-kneading in Example 8, once at 250°C by hydraulic pressing.

### (Comparative Example 9)

A resin composite material sheet having a thickness of 0.5 mm was obtained by thermally compressing the resin composition, obtained by melt-kneading in Example 9, once at 280°C by hydraulic pressing.

### (Comparative Example 10)

A resin composite material sheet having a thickness of 0.5 mm was obtained by thermally compressing the resin composition, obtained by melt-kneading in Example 10, once at 220°C by hydraulic pressing.

### [Evaluation of Examples and Comparative Examples]

The average value of the average degrees of flexion of the exfoliated graphite oxide in two orthogonal cutting planes of each of the thus obtained resin composite material sheets of Examples 1 to 10 and Comparative Examples 1 to 10 and the tensile elastic modulus of each of the resin composite material sheets were evaluated in the following manner.

### (1) Evaluation of degree of flexion

Each of the resin composite material sheets of Examples 1 to 10 and Comparative Examples 3 to 10 was cut along two orthogonal cutting planes, and the cross-sections of the exfoliated graphite oxide exposed in the cutting planes were observed with a TEM. The average degree of flexion of the exfoliated graphite oxide in each of the two cutting planes was measured, and the average value of these average degrees of flexion was calculated. The results are shown in the following Tables 1 and 2.

### (2) Evaluation of tensile elastic modulus

The tensile elastic modulus of each of the resin composite material sheets of Examples 1 to 10 and Comparative Examples 1 to 10 at 23°C was measured in accordance with JIS K6767. The results are shown in the following Tables 1 and 2.

**[Table 1]**

| | Exfoliated graphite (part(s)) | Degree of flexion | Tensile elastic modulus (GPa) |
|---|---|---|---|
| Ex.1 | 3 | 0.20 | 3.0 |
| Ex.2 | 3 | 0.15 | 3.2 |
| Ex.3 | 1 | 0.18 | 2.6 |
| Ex.4 | 1 | 0.16 | 2.6 |
| Comp. Ex.1 | 0 | - | 1.5 |
| Comp. Ex.2 | 0 | - | 1.6 |
| Comp. Ex.3 | 3 | 0.30 | 2.0 |
| Comp. Ex.4 | 1 | 0.36 | 1.6 |

**[Table 2]**

| | Exfoliated graphite (part(s)) | Degree of flexion | Tensile elastic modulus (GPa) |
|---|---|---|---|
| Ex.5 | 3 | 0.23 | 2.7 |
| Ex.6 | 3 | 0.18 | 4.0 |
| Ex.7 | 3 | 0.20 | 3.6 |
| Ex.8 | 3 | 0.16 | 4.6 |
| Ex.9 | 3 | 0.19 | 3.5 |
| Ex.10 | 3 | 0.20 | 4.6 |
| Comp. Ex.5 | 3 | 0.37 | 1.6 |
| Comp. Ex.6 | 3 | 0.34 | 3.2 |
| Comp. Ex.7 | 3 | 0.35 | 2.6 |
| Comp. Ex.8 | 3 | 0.33 | 3.7 |
| Comp. Ex.9 | 3 | 0.37 | 2.9 |
| Comp. Ex.10 | 3 | 0.33 | 3.8 |

As is clear from Table 1, the average value of the average degrees of flexion of the exfoliated graphite oxide of each of the resin composite material sheets obtained in Examples 1 to 4 in accordance with the manufacture method according to the present invention is 0.15 to 0.20, that is, less than 0.3. On the other hand, the average value of the average degrees of flexion of the exfoliated graphite oxide of each of the resin composite material sheets obtained in Comparative Examples 3 and 4 is 0.30 or more. Therefore, it is found that folds and wrinkles are removed from the exfoliated graphite oxide by the manufacture method according to the present invention so that the exfoliated graphite oxide have a shape close to a plate shape.

Further, the tensile elastic moduli of the resin composite material sheets of Comparative Examples 3 and 4 are not greatly increased as compared to those of the resin composite material sheets of Comparative Examples 1 and 2 not containing the exfoliated graphite oxide. The reason for this is considered to be that the exfoliated graphite oxide contained in the resin composite material sheets of Comparative Examples 3 and 4 have high degrees of flexion, that is, have many folds and wrinkles, and therefore the effect of the exfoliated graphite oxide on reinforcing the resin composite material sheet is not sufficiently exhibited.

On the other hand, the resin composite material sheets obtained in Examples 1 to 4 have an increased tensile elastic modulus of 2.6 to 3.2. The reason for this is considered to be that, as described above, the exfoliated graphite oxide have a shape closer to a plate shape, and therefore the mechanical strength of the resin composite material sheet is effectively enhanced by the exfoliated graphite oxide.

Further, the resin composite material sheets obtained in Examples 5 to 10 have a significantly increased tensile elastic modulus as compared to the resin composite material sheets obtained in Comparative Examples 5 to 10 corresponding to Examples 5 to 10, respectively. The reason for this is considered to be that, in Examples 5 to 10, the exfoliated graphite oxide have a shape closer to a plate shape.

## Claims

1. A resin composite material comprising a synthetic resin and exfoliated graphite or exfoliated graphite oxide,
wherein when a value represented by (1-A/B), where A is a shortest distance between both ends of a cross-section of one of the exfoliated graphite or of the exfoliated graphite oxide exposed in one cutting plane along which the resin composite material is cut and B is a length of a path between the both ends, is defined as a degree of flexion of the one of the exfoliated graphite or of the exfoliated graphite oxide in the cutting plane and an average value of degrees of flexion of the exfoliated graphite or of the exfoliated graphite oxide exposed in the cutting plane is defined as an average degree of flexion in the cutting plane,
an average value of an average degree of flexion of the exfoliated graphite or of the exfoliated graphite oxide in one of two orthogonal cutting planes along which the resin composite material is cut and an average degree of flexion of the exfoliated graphite or of the exfoliated graphite oxide in the other cutting plane is less than 0.3.

2. The resin composite material according to claim 1, wherein the synthetic resin is polypropylene.

3. A method for manufacturing the resin composite material according to claim 1 or 2, the method comprising the steps of:
preparing two or more resin compositions having the synthetic resin and the exfoliated graphite or the exfoliated graphite oxide; and
stacking and pressing the two or more resin compositions together after the preparation step.

4. The method for manufacturing the resin composite material according to claim 3, wherein the preparation step includes the step of melt-kneading the synthetic resin and the exfoliated graphite or the exfoliated graphite oxide to prepare the resin composition.

5. The method for manufacturing the resin composite material according to claim 3, wherein the preparation step includes the steps of:
dispersing the exfoliated graphite or the exfoliated graphite oxide in a dispersion medium to obtain a dispersion liquid in which the exfoliated graphite or the exfoliated graphite oxide are dispersed;
applying the dispersion liquid onto a surface of the synthetic resin after the dispersion step; and
volatilizing the dispersion liquid contained in the dispersion liquid applied onto the synthetic resin after the application step to prepare the resin composition in which the exfoliated graphite or the exfoliated graphite oxide are attached to the surface of the synthetic resin.

6. The method for manufacturing the resin composite material according to any one of claims 3 to 5, the method further comprising, after the pressing step, the additional pressing step of further preparing the obtained two or more resin composite materials and stacking and pressing them together, wherein the additional pressing step is performed once or more.
